# EUROPÄISCHE PATENTANMELDUNG

(11) **EP 4 728 862 A1**
(43) Veröffentlichungstag der Anmeldung: **22.04.2026**
(21) Anmeldenummer: 25204315.3
(22) Anmeldetag: 24.09.2025
(51) Int. Cl.: A01M 7/00, A01C 15/16

(54) **FÖRDERLEITUNG FÜR EINE LANDWIRTSCHAFTLICHE VERTEILMASCHINE SOWIE LANDWIRTSCHAFTLICHE VERTEILMASCHINE ZUM VERTEILEN VON VERTEILMATERIAL**

(30) Priorität: 16.10.2024 DE 102024130029
(71) Anmelder: Amazonen-Werke H. Dreyer SE & Co. KG, 49205 Hasbergen (DE)
(72) Erfinder: Haßelmann, Leon, 49205 Hasbergen (DE); Geyer, Oliver, 49205 Hasbergen (DE); Dembeck, Achim, 49205 Hasbergen (DE)
(74) Vertreter: Heisel, Per-Christian

(57) **Zusammenfassung**

Die Erfindung betrifft eine Förderleitung (1) für eine landwirtschaftliche Verteilmaschine, wie z. B. eine Feldspritze oder eine Sämaschine, aufweisend:
- eine Eingangseinrichtung (2) zum Einströmen druckbeaufschlagbaren Verteilmaterials in die Förderleitung (1),
- eine Ausgangseinrichtung (3) zum Ausströmen druckbeaufschlagbaren Verteilmaterials aus der Förderleitung (1), und
- mindestens eine Verbindungseinrichtung (4) zur Strömungsverbindung der Eingangseinrichtung (2) mit der Ausgangseinrichtung (3),
- wobei die mindestens eine Verbindungseinrichtung (4) derart längenveränderlich ausgebildet ist, dass diese in Abhängigkeit des Drucks, mit welchem Verteilmaterial beaufschlagbar ist, eine veränderliche Länge oder eine Längung aufweist.

Ferner betrifft die Erfindung eine landwirtschaftliche Verteilmaschine zum Verteilen von körnigem oder flüssigen Verteilmaterial mit wenigstens einer Förderleitung (1).

## Beschreibung

Die Erfindung betrifft eine Förderleitung für eine landwirtschaftliche Verteilmaschine, wie z. B. eine Feldspritze oder eine Sämaschine, und zum Fördern von Verteilmaterial. Ferner betrifft die Erfindung eine landwirtschaftliche Verteilmaschine zum Verteilen von, z. B. körnigem und/oder flüssigen, Verteilmaterial.

Bekannte Verteilmaschinen, wie z. B. eine Feldspritze, weisen ein Spritzgestänge auf, das klappbar ausgebildet ist, um die Arbeitsbreite zu erhöhen und ein Fahren auf beispielsweise Landstraßen zu ermöglichen.

Derartige klappbare Ausgestaltungen können z. B. mit Förderleitungen, die jeweils einen Schleppschlauch aufweisen können, bestückt werden. Wird nun allerdings das Spritzgestänge geklappt, können die Förderleitungen von dem Spritzgestänge aufgrund ihrer Länge eingeklemmt werden. Somit kann eine oder können mehrere Förderleitungen zum Fördern von Verteilmaterial unterbrochen oder zerstört werden.

Um dies zu vermeiden, muss der Landwirt vor jedem Klappvorgang aus seinem Zugfahrzeug aussteigen und die Förderleitungen kontrollieren bzw. Förderleitungen, die drohen eingeklemmt zu werden, befreien, um eine störungsfreie und korrekte Bearbeitung eines Feldes zu gewährleisten.

Vor diesem Hintergrund ist es Aufgabe der vorliegenden Erfindung, eine Förderleitung für eine landwirtschaftliche Verteilmaschine und zum Fördern von Verteilmaterial sowie eine landwirtschaftliche Verteilmaschine zum Verteilen von Verteilmaterial anzugeben, welche ein Klemmen einer Förderleitung in z. B. einem Spritzgestänge einer landwirtschaftlichen Verteilmaschine unterbindet und/oder welche kostengünstig herstellbar ist.

Diese Aufgabe wird durch die Merkmale der unabhängigen Patentansprüche gelöst. Weitere vorteilhafte Weiterbildungen sind Gegenstand der Unteransprüche.

Ein erster Aspekt der vorliegenden Erfindung umfasst eine Förderleitung für eine landwirtschaftliche Verteilmaschine, wie z. B. eine Feldspritze oder eine Sämaschine, und zum Fördern von Verteilmaterial. Bei dem Verteilmaterial kann es sich um Spritzflüssigkeit handeln bzw. kann die Förderleitung zum Fördern von Spritzflüssigkeit ausgebildet sein. Auch kann es sich bei dem Verteilmaterial um körniges Material mit Luft zum, beispielsweise pneumatischen, Transport des körnigen Materials handeln.

Die Förderleitung weist eine Eingangseinrichtung zum Einströmen druckbeaufschlagbaren Verteilmaterials in die Förderleitung auf. Ferner weist die Förderleitung eine Ausgangseinrichtung zum Ausströmen druckbeaufschlagbaren Verteilmaterials aus der Förderleitung auf.

Außerdem weist die Förderleitung mindestens eine Verbindungseinrichtung zur Strömungsverbindung der Eingangseinrichtung mit der Ausgangseinrichtung auf. Dabei ist die mindestens eine Verbindungseinrichtung derart längenveränderlich ausgebildet, dass diese in Abhängigkeit des Drucks, mit welchem Verteilmaterial beaufschlagbar ist, eine veränderliche Länge oder eine Längung aufweist.

Unter dem Begriff Längung kann in der vorliegenden Beschreibung "das Längen", ein Verlängern, und/oder ein Dehnen verstanden werden.

Im Ergebnis kann vorgestellte Ausbildung der Förderleitung ein Klemmen einer Förderleitung, z. B. in einem Spritzgestänge einer landwirtschaftlichen Verteilmaschine, aufgrund der veränderlichen Länge bzw. der Längung unterbinden. Denn z. B. für den Fall, dass der im Inneren der mindestens einen Verbindungseinrichtung auf das Verteilmaterial einwirkende Druck beispielsweise geringer ist als der Umgebungsdruck oder kleiner ist als die Kraft eines Energiespeichers der mindestens einen Verbindungseinrichtung, verkürzt sich die Förderleitung. Dabei kann sich die Förderleitung derart verkürzen, dass ein Klemmen einer Förderleitung, z. B. in einem Spritzgestänge einer landwirtschaftlichen Verteilmaschine, bei einem Klappvorgang einer landwirtschaftlichen Verteilmaschine unterbindbar ist. Hingegen ist z. B. für den Fall, dass der im Inneren der mindestens einen Verbindungseinrichtung auf das Verteilmaterial einwirkende Druck beispielsweise größer ist als der Umgebungsdruck oder größer ist als die Kraft eines Energiespeichers der mindestens einen Verbindungseinrichtung, verlängert sich die Förderleitung. Dabei kann sich die Förderleitung derart verlängern, dass ein Ausbringen von Verteilmaterial durch die landwirtschaftliche Verteilmaschine begünstigt wird. Ferner ist ein Anheben und Absenken z. B. eines Schleppschlauches der Förderleitung möglich. Auch ist die Förderleitung kostengünstig herstellbar.

Des Weiteren kann der Druck, mit welchem Verteilmaterial beaufschlagbar ist, von einer Fördereinrichtung einer landwirtschaftlichen Verteilmaschine generiert und/oder eingestellt werden. Auch kann der Druck bedarfsgerecht zu- und/oder abschaltbar und/oder anpassbar sein.

Zudem kann das Verteilmaterial eine Spritzflüssigkeit oder körniges Material mit Luft zum, beispielsweise pneumatischen, Transport des körnigen Materials sein oder aufweisen.

Des Weiteren kann die mindestens eine Verbindungseinrichtung so ausgebildet sein, dass je größer der Druck im Inneren der mindestens einen Verbindungseinrichtung ist, desto größer ist deren Länge bzw. die Länge der mindestens einen Verbindungseinrichtung oder desto größer ist deren Längung bzw. ist die Längung der mindestens einen Verbindungseinrichtung.

Auch kann die mindestens eine Verbindungseinrichtung so ausgebildet sein, dass diese in einem ersten Zustand, in welchem die mindestens eine Verbindungseinrichtung einem ersten Druck, mit welchem Verteilmaterial beaufschlagbar sein kann, ausgesetzt ist, eine erste Länge aufweist. Auch kann der erste Druck dem Umgebungsdruck oder einem Druck entsprechen, der von einem Energiespeicher der mindestens einen Verbindungseinrichtung erzeugt werden kann.

Ferner kann die mindestens eine Verbindungseinrichtung so ausgebildet sein, dass diese in einem zweiten Zustand, in welchem die mindestens eine Verbindungseinrichtung einem zweiten Druck, mit welchem Verteilmaterial beaufschlagbar sein kann, ausgesetzt ist, eine zweite Länge aufweist. Der zweite Druck kann z. B. von einer Fördereinrichtung einer landwirtschaftlichen Verteilmaschine generiert und/oder eingestellt werden. Auch kann der Druck bedarfsgerecht zu- und/oder abschaltbar und/oder anpassbar sein.

Dabei kann der erste Druck geringer sein als der zweite Druck.

Auch kann die erste Länge geringer sein als die zweite Länge.

Außerdem kann die mindestens eine Verbindungseinrichtung so ausgebildet sein, dass im Vergleich zwischen erstem und zweitem Zustand die mindestens eine Verbindungseinrichtung im zweiten Zustand wenigstens 10 cm oder wenigstens 15 cm oder wenigstens 20 cm länger ist als im ersten Zustand.

Ferner kann die mindestens eine Verbindungseinrichtung als selbst-zusammenfaltender oder als sich selbst verkürzender Hohlzylinder oder als selbst-zusammenfaltender oder als sich selbst verkürzender Schlauch ausgebildet sein.

Auch kann die Längung der mindestens einen Verbindungseinrichtung vom Druck, mit welchem Verteilmaterial beaufschlagbar sein kann, abhängig sein und/oder bestimmt werden. Also je höher der beaufschlagte Druck, desto länger kann die mindestens eine Verbindungseinrichtung sein.

Zudem kann die mindestens eine Verbindungseinrichtung teleskopisch und/oder als sich selbst verkürzend ausgebildet sein.

Außerdem kann die mindestens eine Verbindungseinrichtung ziehharmonikaartig und/oder als sich selbst verkürzend ausgebildet sein.

Vereinfacht und zusammengefasst dargestellt, kann die mindestens eine Verbindungseinrichtung so ausgebildet sein, dass der Druck im Inneren der mindestens einen Verbindungseinrichtung die Länge der mindestens einen Verbindungseinrichtung beeinflusst. Dabei kann gelten, je höher der Druck desto länger die mindestens eine Verbindungseinrichtung.

Im Ergebnis kann auf einfache Weise ohne Nutzereingriff z. B. ein Schleppschlauch angehoben und abgesenkt werden. Anders ausgedrückt, kann beispielsweise die Länge eines Schleppschlauch variiert bzw. verändert werden. Ferner kann mithilfe der vorgestellten Ausbildung beim Einklappen eines Gestänges einer Verteilmaschine ein Einklemmen von Schleppschläuchen zwischen weiteren Maschinenkomponenten der Verteilmaschine vermieden werden. Denn durch die verkürzbare Länge der erfindungsgemäßen Förderleitung ist das vorgeschilderte Einklemmen vermeidbar. In der Folge kann also ein Abreißen eines Schleppschlauchs der Förderleitung verhindert werden. Ferner kann eine Verteilmaschine sicher auf einer Straße und einsatzbereit auf dem Feld, ohne weiteren Eingriff eines Nutzers, betrieben werden.

Des Weiteren kann die Eingangseinrichtung in ihrem Inneren einen Einlasskanal aufweisen, dessen erstes Ende außerhalb der mindestens einen Verbindungseinrichtung und dessen zweites Ende innerhalb der mindestens einen Verbindungseinrichtung angeordnet sein kann. Durch den Einlasskanal kann Verteilmaterial in die mindestens eine Verbindungseinrichtung und/oder in die Förderleitung strömen. Auch kann der Einlasskanal einen konstanten Innendurchmesser aufweisen.

Dabei kann das erste Ende einen Einlass für Verteilmaterial aufweisen. Das zweite Ende kann einen Auslass für Verteilmaterial in die mindestens eine Verbindungseinrichtung aufweisen.

Ferner kann am zweiten Ende ein Energiespeicher der mindestens einen Verbindungseinrichtung anbringbar und/oder anordenbar sein.

Des Weiteren kann die Ausgangseinrichtung in ihrem Inneren einen Auslasskanal aufweisen, dessen erstes Ende innerhalb der mindestens einen Verbindungseinrichtung und dessen zweites Ende außerhalb der mindestens einen Verbindungseinrichtung angeordnet sein kann. Durch den Auslasskanal kann Verteilmaterial aus der mindestens einen Verbindungseinrichtung und/oder aus der Förderleitung strömen.

Dabei kann das erste Ende einen Einlass für Verteilmaterial aus der mindestens einen Verbindungseinrichtung aufweisen. Das zweite Ende kann einen Auslass für Verteilmaterial aufweisen.

Außerdem kann am ersten Ende ein Energiespeicher der mindestens einen Verbindungseinrichtung anbringbar und/oder anordenbar sein.

Zudem kann der Auslasskanal am ersten Ende einen ersten und am zweiten Ende einen zweiten Innendurchmesser aufweisen. Dabei kann der erste Innendurchmesser größer ausgebildet sein als der zweite Innendurchmesser. Auch kann das Verhältnis vom ersten Innendurchmesser des Auslasskanals zum zweiten Innendurchmesser des Auslasskanals größer als 60 Prozent oder größer als 75 Prozent oder größer als 80 Prozent oder größer als 85 Prozent sein oder genau 87,5 Prozent betragen. Die Innendurchmesser können auf das zu verteilende Verteilmaterial angepasst sein. Durch die unterschiedlichen Durchmesser kann ein Rückstau an druckbeaufschlagtem Verteilmaterial im Inneren der mindestens einen Verbindungseinrichtung erzeugt werden, wodurch der Druck im Inneren der mindestens einen Verbindungseinrichtung erhöhbar ist. Dies kann zu einer Längung der mindestens einen Verbindungseinrichtung führen.

Ferner kann der erste und/oder der zweite Innendurchmesser einen konstanten Querschnitt aufweisen. Dies erleichtert die Herstellung.

Des Weiteren kann der Innendurchmesser eines Einlasskanals der Eingangseinrichtung das gleiche Maß aufweisen, wie der erste Innendurchmesser des Auslasskanals. Somit können Kosten bei der Herstellung gesenkt werden.

Außerdem kann der Übergang vom ersten Innendurchmesser auf den zweiten Innendurchmesser fließend oder in einer Stufe oder sprunghaft ausgebildet sein. Auf diese Weise kann der Druck im Inneren der Förderleitung und/oder im Inneren der mindestens einen Verteileinrichtung erhöht werden. Dies kann zu einer Längung der mindestens einen Verbindungseinrichtung führen.

Zudem kann die Ausgangseinrichtung und/oder der Auslasskanal einteilig, einstückig, oder mehrteilig, zweiteilig ausgebildet sein.

So kann die Ausgangseinrichtung einen ersten und einen zweiten Teil umfassen, welche zusammen den Auslasskanal und/oder die Ausgangseinrichtung bilden. Dabei können der erste und zweite Teil koaxial angeordnet sein.

Auch kann der erste Teil einen ersten und der zweite Teil einen zweiten Innendurchmesser aufweisen. Ferner kann der erste Teil zumindest teilweise und der zweite Teil den gleichen Außendurchmesser aufweisen. Zudem können der erste Teil und der zweite Teil aneinander angeordnet und/oder aneinander befestigbar oder miteinander verschraubbar sein.

Außerdem kann der erste Teil außenseitig einen Teil für einen Schnellanschluss, wie z. B. für einen Bajonettanschluss, aufweisen.

Ferner kann der erste Teil das erste Ende und der zweite Teil das zweite Ende des Auslasskanals der Ausgangseinrichtung bilden.

Der zweite Teil kann eine Verengung zur Querschnittsverengung des ersten Innendurchmessers des ersten Teils aufweisen. Die Verengung kann in Form einer Lochblende ausgebildet sein. Auch kann die Verengung einen zweiten Innendurchmesser aufweisen.

Ferner kann der zweite Teil einen Hohlzylinder aufweisen, in welchen eine Verengung des zweiten Teils einsetzbar sein kann oder welcher die Verengung ausbilden kann.

Des Weiteren kann die mindestens eine Verbindungseinrichtung einen Energiespeicher aufweisen, der die Länge der mindestens einen Verbindungseinrichtung in den ersten Zustand oder in einen Ausgangszustand zurückführen kann.

Dabei kann der Energiespeicher bestrebt sein, den Abstand zwischen Eingangseinrichtung und Ausgangseinrichtung so kurz wie möglich zu halten.

Ferner kann der Energiespeicher in Form einer Zugfeder ausgestaltet und/oder ausgebildet sein. Zudem kann der Energiespeicher hohlzylinderförmig ausgestaltet sein.

Auch kann der Energiespeicher so ausgebildet sein, dass dieser bereits bei geringer Kraft gedehnt wird und/oder dass dessen vollständige Dehnung von einer Dichtungseinheit der Verbindungseinrichtung vermieden und/oder verhindert wird. Die Kraft, die gegen die Kraft des Energiespeichers wirken kann, kann von einem druckbeaufschlagten Verteilmaterial und/oder von einem Rückstau an druckbeaufschlagtem Verteilmaterial im Inneren der mindestens einen Verbindungseinrichtung hervorgerufen werden. Dies kann zu einer reversiblen Längung der mindestens einen Verbindungseinrichtung führen.

Außerdem kann der Energiespeicher an der Eingangseinrichtung angeordnet und/oder befestigt sein. Auch kann der Energiespeicher an der Ausgangseinrichtung angeordnet und/oder befestigt sein.

Des Weiteren kann der Energiespeicher zwei Enden aufweisen, von denen das eine Ende an der Eingangseinrichtung und das andere Ende an der Ausgangseinrichtung angeordnet und/oder befestigt sein kann. Somit kann der Energiespeicher die Eingangs- und die Ausgangseinrichtung gegeneinander spannen.

Ferner kann der Energiespeicher innerhalb einer Dichtungseinheit der mindestens einen Verbindungseinrichtung so angeordnet und/oder befestigt sein, dass Verteilmaterial in direkter Verbindung und/oder ungehindert und/oder störungsfrei von einem Einlasskanal der Eingangseinrichtung hin zu einem Auslasskanal der Ausgangseinrichtung förderbar ist oder strömen kann.

Zudem kann der Energiespeicher wenigstens den Innendurchmesser eines Einlasskanals der Eingangseinrichtung und/oder eines Auslasskanals der Ausgangseinrichtung, zumindest an dessen ersten Ende, aufweisen. Auch kann der Energiespeicher einen größeren Innendurchmesser als ein Einlasskanal der Eingangseinrichtung und/oder als ein Auslasskanal der Ausgangseinrichtung aufweisen.

Außerdem können der Energiespeicher, ein Einlasskanal der Eingangseinrichtung und/oder ein Auslasskanal der Ausgangseinrichtung konzentrisch und/oder koaxial zueinander ausgerichtet sein. Auf diese Weise ist die Strömung von Verteilmaterial durch die Förderleitung verbesserbar.

Des Weiteren kann die mindestens eine Verbindungseinrichtung eine Dichtungseinheit aufweisen, welche die Länge der mindestens einen Verbindungseinrichtung in den ersten Zustand oder in einen Ausgangszustand zurückführen kann und/oder welche die Eingangseinrichtung mit der Ausgangseinrichtung verbinden kann und/oder welche die Längung der mindestens einen Verbindungseinrichtung, z. B. auf ein Maximum, begrenzt.

Dabei kann die Dichtungseinheit als Faltenbalg ausgebildet sein. Auch kann die Dichtungseinheit verteilmaterialdicht ausgebildet sein. Diese kann also so ausgestaltet und/oder ausgebildet sein, dass der Austritt von Verteilmaterial durch die mindestens eine Verbindungseinrichtung verhindert werden kann.

Zudem kann die Dichtungseinheit so ausgebildet sein, dass eine Überdehnung eines Energiespeichers der mindestens einen Verbindungseinrichtung verhinderbar ist. Somit ist der Energiespeicher vor Beschädigung schützbar.

Außerdem kann die Dichtungseinheit im Wesentlichen hohlzylinderförmig und/oder und ziehharmonikaförmig ausgebildet sein. Somit kann mithilfe der Dichtungseinheit eine Längung oder eine veränderliche Länge realisiert werden.

Des Weiteren kann die Dichtungseinheit wenigstens an ihren Enden einen Innendurchmesser aufweisen, welcher geometrisch komplementär an einen Außendurchmesser der Eingangs- und/oder der Ausgangseinrichtung angepasst ist. Somit kann ein fluiddichter Übergang von der mindestens einen Verbindungseinrichtung zur Eingangs- und/oder zur Ausgangseinrichtung geschaffen werden.

Ferner kann die Dichtungseinheit wenigstens an ihren Enden einen Innendurchmesser aufweisen, welcher mit einem Außendurchmesser der Eingangs- und/oder der Ausgangseinrichtung korrespondiert. Auf diese Weise ist ein fluiddichter Übergang von der mindestens einen Verbindungseinrichtung zur Eingangs- und/oder zur Ausgangseinrichtung leicht realisierbar.

Zudem kann die Eingangseinrichtung ein erstes und ein zweites Ende umfassen. Dabei kann das erste Ende einen form- und/oder reibschlüssigen Verbindungsanschluss für einen ersten Verbindungsteil einer Schnellverbindungseinrichtung der Förderleitung, wie ein Bajonettanschluss, aufweisen. Auch kann das erste Ende oder der Verbindungsanschluss ein Außengewinde aufweisen. Zudem kann das zweite Ende eine Befestigung aufweisen, an welcher ein Energiespeicher der mindestens einen Verbindungseinrichtung anbringbar ist.

Des Weiteren kann die Eingangseinrichtung einen Befestigungsbereich zum Befestigen der Verbindungseinrichtung oder deren Dichtungseinheit an der Eingangseinrichtung aufweisen. Der Befestigungsbereich kann zwischen erstem und zweitem Ende der Eingangseinrichtung angeordnet sein. Auch kann der Befestigungsbereich einen Außendurchmesser aufweisen, welcher geometrisch komplementär an einen Innendurchmesser eines Endes der mindestens einen Verbindungseinrichtung oder deren Dichtungseinheit angepasst ist. Somit kann ein fluiddichter Übergang zwischen Eingangseinrichtung und der mindestens einen Verbindungseinrichtung geschaffen werden.

Außerdem kann die Förderleitung einen ersten Verbindungsteil einer Schnellverbindungseinrichtung aufweisen, mit welcher die Förderleitung schnell und werkzeuglos an eine Verteilmaschine anbringbar ist.

Dabei kann am ersten Ende der Eingangseinrichtung der erste Verbindungsteil, beispielsweise ausgebildet wie ein Teil eines Bajonettanschlusses, angeordnet sein. Der erste Verbindungsteil kann auch ein Innengewinde aufweisen, mit welchen der erste Verbindungsteil mit der Eingangseinrichtung, z. B. fluidfördernd und/oder fluiddicht, verbindbar ist.

Ferner kann der erste Verbindungsteil als Teil eines Bajonettanschlusses, z. B. in Form wenigstens eines Stiftes für eine Kulissenführung oder in Form wenigstens einer Kulissenführung für einen Stift, ausgebildet sein. Auch kann der erste Verbindungsteil geometrisch korrespondierend zu einem Düsenhalter oder zu einem Düsenstock für Spritzdüsen einer Verteilmaschine ausgebildet sein. Somit kann die Förderleitung schnell, einfach und werkzeuglos an einer Verteilmaschine montiert oder von einer Verteilmaschine demontiert werden.

Auch kann der erste Verbindungsteil zumindest abschnittsweise nach Art einer Düsenkappe oder einer Spritzdüse ausgebildet sein, sodass der erste Verbindungsteil an einem Düsenstock oder an einem Düsenhalter einer Verteilmaschine anordenbar ist.

Somit kann die Eingangseinrichtung bzw. die gesamte Förderleitung schnell, einfach und werkzeuglos an einem Düsenhalter oder Düsenstock einer Verteilmaschine montiert oder von einem Düsenhalter oder Düsenstock einer Verteilmaschine demontiert werden.

Zudem kann der erste Verbindungsteil einen mit einem Düsenstock oder einen mit einem Düsenhalter einer Verteilmaschine, welcher an einem Rahmen oder Gestänge einer Verteilmaschine anordenbar sein kann, korrespondierenden Verbindungsabschnitt aufweisen.

Außerdem kann der erste Verbindungsteil so ausgebildet sein, dass dieser mit einer Vierteldrehung relativ zu einem Düsenhalter oder zu einem Düsenstock einer Verteilmaschine von dem Düsenhalter/Düsenstock lösbar oder an dem Düsenhalter/Düsenstock befestigbar ist. Somit kann die Förderleitung schnell, einfach und werkzeuglos an einer Verteilmaschine montiert oder von einer Verteilmaschine demontiert werden.

Des Weiteren kann die Ausgangseinrichtung ein erstes und ein zweites Ende umfassen. Am zweiten Ende kann ein zweiter Verbindungsteil einer Schnellverbindungseinrichtung der Förderleitung, wie ein Bajonettanschluss, angeordnet sein.

Der zweite Verbindungsteil kann als Teil eines Bajonettanschlusses, z. B. in Form wenigstens eines Stiftes für eine Kulissenführung oder in Form wenigstens einer Kulissenführung für einen Stift, ausgebildet sein.

Auch kann der zweite Verbindungsteil geometrisch korrespondierend zu einer Spritzdüse einer Verteilmaschine ausgebildet sein.

Ferner kann der zweite Verbindungsteil zumindest abschnittsweise nach Art eines Düsenhalters oder eines Düsenstocks oder eines Düsenkörpers einer Verteilmaschine ausgebildet sein, an welchem eine Spritzdüse einer Verteilmaschine oder ein Schleppschlauch der Förderleitung anordenbar ist.

Zudem kann der zweite Verbindungsteil einen mit einer Spritzdüse korrespondierenden Verbindungsabschnitt aufweisen. Somit kann z. B. ein Schleppschlauch schnell, einfach und werkzeuglos an der Förderleitung montiert oder von einer Förderleitung demontiert werden.

Der zweite Verbindungsteil kann so ausgebildet sein, dass mit einer Vierteldrehung einer Spritzdüse einer Verteilmaschine oder eines Schleppschlauchs der Förderleitung relativ zum zweiten Verbindungsteil die Spritzdüse oder der Schleppschlauch von dem zweiten Verbindungsteil lösbar oder an dem zweiten Verbindungsteil befestigbar ist.

Des Weiteren kann die Ausgangseinrichtung ein erstes und ein zweites Ende umfassen. Das erste Ende kann eine Befestigung aufweisen, an welcher ein Energiespeicher der mindestens einen Verbindungseinrichtung anbringbar ist.

Auch kann die Ausgangseinrichtung einen Befestigungsbereich zum Befestigen der mindestens einen Verbindungseinrichtung oder deren Dichtungseinheit aufweisen. Der Befestigungsbereich kann zwischen einem ersten und zweiten Ende der Ausgangseinrichtung angeordnet sein. Zudem kann der Befestigungsbereich einen Außendurchmesser aufweisen, welcher geometrisch komplementär an einen Innendurchmesser eines Endes der mindestens einen Verbindungseinrichtung oder deren Dichtungseinheit angepasst ist. Somit kann ein fluiddichter Übergang zwischen Ausgangseinrichtung und der mindestens einen Verbindungseinrichtung geschaffen werden.

Außerdem kann die Förderleitung eine erste Halteeinrichtung zum Halten oder Befestigen der mindestens einen Verbindungseinrichtung oder deren Dichtungseinheit an der Eingangseinrichtung aufweisen.

Die erste Halteeinrichtung kann eine form- und/oder reibschlüssige Verbindung zwischen der Eingangseinrichtung und der mindestens einen Verbindungseinrichtung unterstützen und/oder ausbilden. Dabei kann die erste Halteeinrichtung in Form einer Klemmschelle ausgebildet sein.

Des Weiteren kann die Förderleitung eine zweite Halteeinrichtung zum Halten oder Befestigen der mindestens einen Verbindungseinrichtung oder deren Dichtungseinheit an der Ausgangseinrichtung aufweisen.

Die zweite Halteeinrichtung kann eine form- und/oder reibschlüssige Verbindung zwischen der Ausgangseinrichtung und der mindestens einen Verbindungseinrichtung unterstützen und/oder ausbilden. Dabei kann die zweite Halteeinrichtung in Form einer Klemmschelle ausgebildet sein.

Ferner kann die Förderleitung eine Düse aufweisen, die an der Ausgangseinrichtung angeordnet ist.

Alternativ kann die Förderleitung einen Schleppschlauch aufweisen, der an der Ausgangseinrichtung angeordnet ist. Der Schleppschlauch kann einen ersten Verbindungsteil einer Schnellverbindungseinrichtung aufweisen, mit welchem der Schleppschlauch schnell und werkzeuglos an der Ausgangseinrichtung angeordnet werden kann und/oder mit welchem der Schleppschlauch an einem zweiten Verbindungsteil einer Schnellverbindungseinrichtung der Ausgangseinrichtung angeordnet sein kann.

Auch kann der erste Verbindungsteil als Teil eines Bajonettanschlusses, z. B. in Form wenigstens eines Stiftes für eine Kulissenführung oder in Form wenigstens einer Kulissenführung für einen Stift, ausgebildet sein.

Der Schleppschlauch kann ein Gewicht und einen kugelförmigen Schutz als Abriebschutz für das Gewicht umfassen.

Außerdem kann der Schleppschlauch einen Auslassschlauch umfassen, welcher Verteilmaterial auf ein Feld ausgeben kann. Dabei kann an einem Ende des Auslassschlauchs das Gewicht sowie der Schutz und am anderen Ende der erste Verbindungsteil angeordnet sein.

Des Weiteren kann die Förderleitung mindestens zwei Verbindungseinrichtungen aufweisen, die in Reihe und/oder hintereinander und/oder nacheinander und/oder aneinander angeordnet sein können, um eine gemeinsame Verbindungseinrichtung zu bilden.

Ein zweiter Aspekt der vorliegenden Erfindung umfasst eine landwirtschaftliche Verteilmaschine zum Verteilen von, z. B. körnigem und/oder flüssigen, Verteilmaterial.

Es wird ausdrücklich darauf hingewiesen, dass die Merkmale der Förderleitung, wie sie unter dem ersten Aspekt erwähnt werden, einzeln oder miteinander kombinierbar bei der landwirtschaftlichen Verteilmaschine Anwendung finden können.

Anders ausgedrückt, die oben unter dem ersten Aspekt der Erfindung genannten Merkmale betreffend die Förderleitung können auch hier unter dem zweiten Aspekt der Erfindung mit weiteren Merkmalen kombiniert werden.

Eine landwirtschaftliche Verteilmaschine zum Verteilen von, z. B. körnigem und/oder flüssigen, Verteilmaterial umfasst wenigstens eine Förderleitung nach dem ersten Aspekt.

Des Weiteren kann die landwirtschaftliche Verteilmaschine ein Befestigungsprofil zur Befestigung und Versorgung der wenigstens einen Förderleitung mit Verteilmaterial aufweisen.

Das Befestigungsprofil, z. B. als Hohlprofil ausgestaltet und/oder zur Förderung von Verteilmaterial ausgebildet, kann pro Förderleitung einen zweiten Verbindungsteil einer Schnellverbindungseinrichtung aufweisen, an welchen ein erster Verbindungsteil einer Schnellverbindungseinrichtung einer Förderleitung, der am ersten Ende der Eingangseinrichtung angeordnet sein kann, schnell und werkzeuglos befestigbar sein kann.

Auch kann das Befestigungsprofil hohl und/oder zur Förderung von Verteilmaterial ausgebildet sein.

Ferner können an dem Befestigungsprofil mehrere Förderleitungen, z. B. parallel, angeordnet sein.

Zudem ist es möglich, dass an dem Befestigungsprofil mehrere Förderleitungen so angeordnet sind, dass mit diesen gleichzeitig Verteilmaterial ausbringbar ist.

Des Weiteren kann die landwirtschaftliche Verteilmaschine wenigstens zwei Förderleitungen aufweisen, deren Länge unterschiedlich ist.

Auch kann die landwirtschaftliche Verteilmaschine wenigstens zwei Förderleitungen aufweisen, die eine unterschiedliche Zahl von Verbindungseinrichtungen umfassen.

Ferner kann die landwirtschaftliche Verteilmaschine wenigstens zwei Förderleitungen aufweisen, von denen eine mindestens eine Verbindungseinrichtung und eine weitere mindestens zwei Verbindungseinrichtungen aufweist.

Nachfolgend wird der oben dargestellte Erfindungsgedanke nochmals und ergänzend mit anderen Worten ausgedrückt.

Dieser Gedanke betrifft - vereinfacht dargestellt - eine Förderleitung für eine landwirtschaftliche Verteilmaschine, wie z. B. eine Feldspritze oder eine Sämaschine, und zum Fördern von Verteilmaterial.

Dabei kann die Förderleitung eine Verbindungseinrichtung, z. B. einen Faltenbalg und/oder einen Energiespeicher, wie z. B. eine Feder, aufweisen. Ferner kann die Förderleitung eine Eingangseinrichtung zum Einströmen druckbeaufschlagbaren Verteilmaterials in die Förderleitung und zur Kopplung mit einer Spritzleitung oder mit einem Befestigungsprofil zur Befestigung und Versorgung der Förderleitung mit Verteilmaterial sowie eine Ausgangseinrichtung zum Ausströmen druckbeaufschlagbaren Verteilmaterials aus der Förderleitung und zum Koppeln mit einem Schleppschlauch aufweisen.

Der Energiespeicher kann über jeweils eine Einhängemöglichkeit (Befestigung der Eingangseinrichtung, Befestigung der Ausgangseinrichtung) zwischen der Eingangs- und Ausgangseinrichtung angeordnet und mit diesen verbunden sein.

Der Faltenbalg der Verbindungseinrichtung kann deren Energiespeicher umhüllen und den Raum zwischen Eingangs- und Ausgangseinrichtung abdichten.

Z. B. beim Spritzen von Spritzflüssigkeit steigt der Druck in der Verbindungseinrichtung an, wodurch eine Kraft auf eine Stirnfläche der Ausgangseinrichtung bzw. auf eine Verengung eines zweiten Teils der Ausgangseinrichtung wirkt. Dies sorgt für eine Verlängerung des Energiespeichers und für eine Längung der Förderleitung.

Bricht der Landwirt z. B. den Spritzvorgang ab, sinkt der Druck in der Verbindungseinrichtung und der Energiespeicher verkürzt die Verbindungseinrichtung.

Nachstehend wird die Erfindung anhand eines Ausführungsbeispiels in Verbindung mit zugehörigen Zeichnungen näher erläutert. Hierbei zeigen schematisch:
- **Fig. 1**: eine räumliche Ansicht auf eine Förderleitung für eine landwirtschaftliche Verteilmaschine und zum Fördern von Verteilmaterial;
- **Fig. 2**: eine Seitenansicht auf die Förderleitung aus Figur 1;
- **Fig. 3**: eine Schnittansicht von Figur 2;
- **Fig. 4**: eine Vergrößerung der Schnittansicht aus Figur 3;
- **Fig. 4a**: eine vergrößerte Ansicht aus Figur 4; und
- **Fig. 5 und 6**: eine vergrößerte, räumliche Darstellung eines Endes der Förderleitung aus Figur 1.

In der nachfolgenden Beschreibung werden gleiche Bezugszeichen für gleiche Gegenstände verwendet.

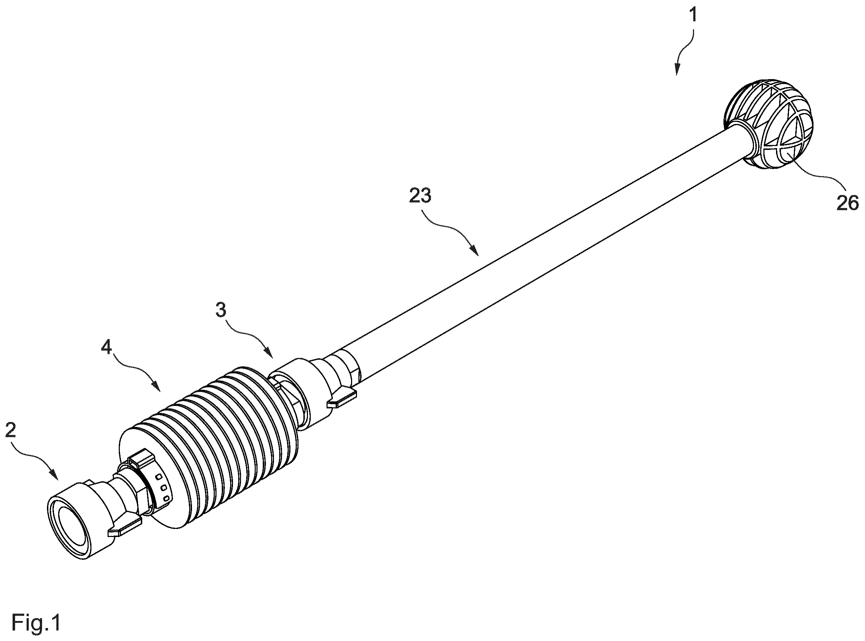

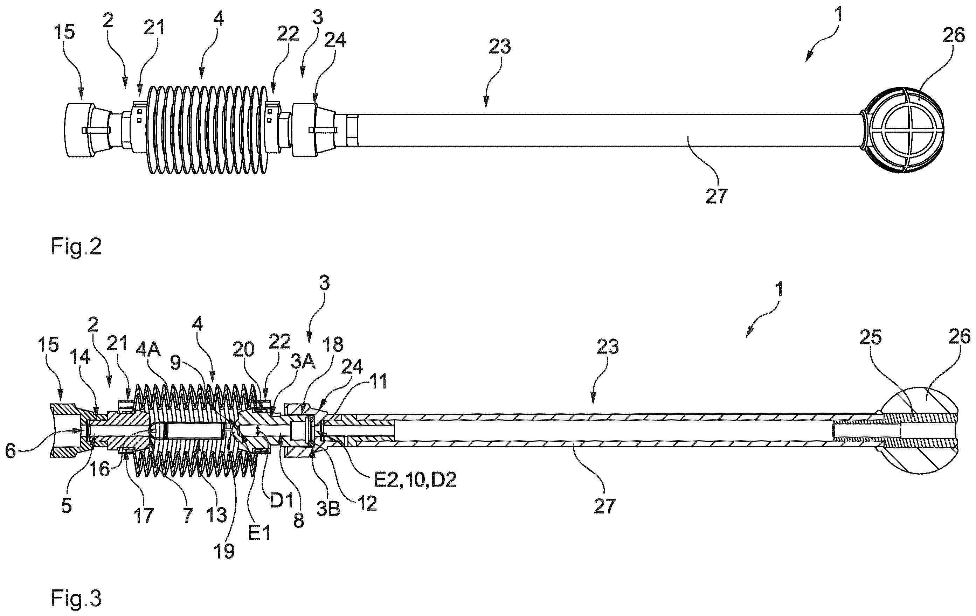

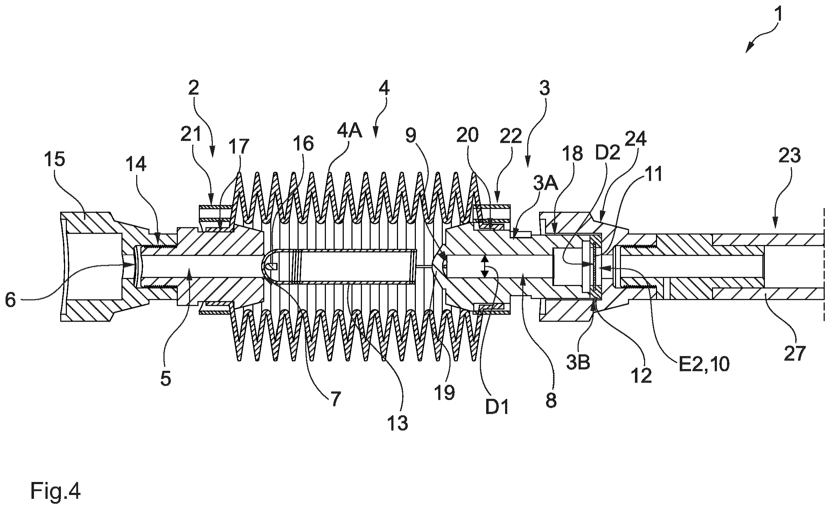

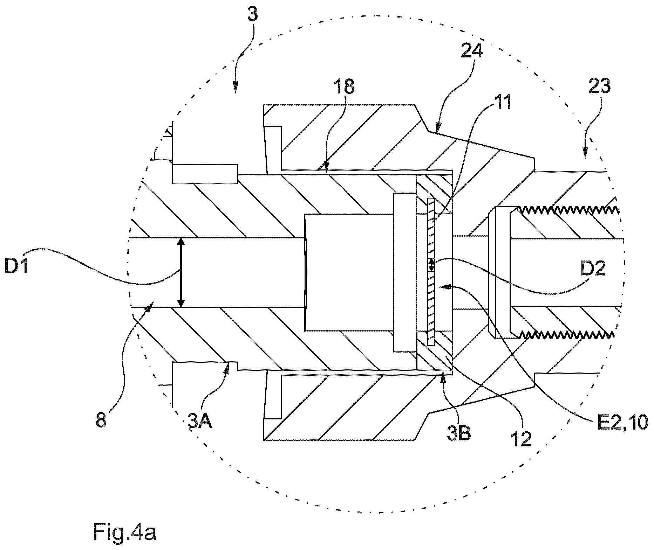

Figur 1 zeigt eine räumliche Ansicht auf eine Förderleitung 1 für eine landwirtschaftliche Verteilmaschine und zum Fördern von Verteilmaterial, Figur 2 zeigt eine Seitenansicht auf die Förderleitung 1 aus Figur 1 und Figur 3 zeigt eine Schnittansicht von Figur 2. In Figur 4 ist eine Vergrößerung der Schnittansicht aus Figur 3 dargestellt, wobei in Figur 4a eine vergrößerte Ansicht aus Figur 4 gezeigt ist.

Der Einfachheit und Kürze halber werden nachstehend die Figuren 1 bis 4a gemeinsam beschrieben.

So zeigen die Figuren 1 bis 4a eine Förderleitung 1 für eine landwirtschaftliche Verteilmaschine, wie z. B. eine Feldspritze, und zum Fördern von Verteilmaterial. Bei dem Verteilmaterial handelt es sich im vorliegenden Fall um Spritzflüssigkeit bzw. ist im vorliegenden Fall die Förderleitung 1 zum Fördern von Spritzflüssigkeit ausgebildet.

Die Förderleitung 1 hat gemäß Figur 1 eine Eingangseinrichtung 2 zum Einströmen druckbeaufschlagbaren Verteilmaterials in die Förderleitung 1.

Ferner hat die Förderleitung 1 eine Ausgangseinrichtung 3 zum Ausströmen druckbeaufschlagbaren Verteilmaterials aus der Förderleitung 1.

Des Weiteren umfasst die Förderleitung 1 eine Verbindungseinrichtung 4 zur Strömungsverbindung der Eingangseinrichtung 2 mit der Ausgangseinrichtung 3.

Die Verbindungseinrichtung 4 ist dabei derart längenveränderlich ausgebildet, dass diese in Abhängigkeit des Drucks, mit welchem Verteilmaterial beaufschlagbar ist, eine veränderliche Länge oder eine Längung aufweist.

Im Ergebnis kann ein Klemmen der Förderleitung 1, z. B. in einem Spritzgestänge einer landwirtschaftlichen Verteilmaschine, aufgrund der veränderlichen Länge bzw. der Längung unterbunden werden. Denn genau die Verkürzung der Förderleitung 1 nach dem Ausbringen von druckbeaufschlagbarem Verteilmaterial verhindert dies. Auch ist diese Ausgestaltung kostengünstig herstellbar. Auch ist somit ein Anheben und Absenken z. B. eines Schleppschlauches 23 der Förderleitung 1 möglich.

Im Ergebnis kann vorgestellte Ausbildung der Förderleitung 1 ein Klemmen einer Förderleitung 1, z. B. in einem Spritzgestänge einer landwirtschaftlichen Verteilmaschine, aufgrund der veränderlichen Länge bzw. der Längung unterbinden. Denn z. B. für den Fall, dass der im Inneren der Verbindungseinrichtung 4 auf das Verteilmaterial einwirkende Druck beispielsweise geringer ist als der Umgebungsdruck oder kleiner ist als die Kraft eines Energiespeichers 13 der Verbindungseinrichtung, verkürzt sich die Förderleitung 1. Dabei kann sich die Förderleitung derart verkürzen, dass ein Klemmen der Förderleitung 1, z. B. in einem Spritzgestänge einer landwirtschaftlichen Verteilmaschine, bei einem Klappvorgang einer landwirtschaftlichen Verteilmaschine unterbindbar ist. Auch ist ein Anheben und Absenken z. B. eines Schleppschlauches 23 der Förderleitung 1 möglich.

Der Druck, mit welchem Verteilmaterial beaufschlagbar ist, kann von einer Fördereinrichtung (nicht dargestellt) einer landwirtschaftlichen Verteilmaschine (nicht dargestellt) generiert werden und ist bedarfsgerecht zu- und abschaltbar sowie anpassbar.

Gemäß den Figuren 1 bis 4a ist die Verbindungseinrichtung 4 so ausgebildet, dass je größer der Druck im Inneren der Verbindungseinrichtung 4 desto größer ist deren Länge bzw. desto größer ist deren Längung.

Mit anderen Worten ausgedrückt, ist die Verbindungseinrichtung 4 so ausgebildet, dass diese in einem ersten Zustand, in welchem die Verbindungseinrichtung 4 einem ersten Druck, mit welchem Verteilmaterial beaufschlagbar ist, ausgesetzt ist, eine erste Länge aufweist. Zudem ist die Verbindungseinrichtung 4 so ausgebildet, dass diese in einem zweiten Zustand, in welchem die Verbindungseinrichtung 4 einem zweiten Druck, mit welchem Verteilmaterial beaufschlagbar ist, ausgesetzt ist, eine zweite Länge aufweist.

Dabei ist der erste Druck geringer als der zweite Druck, wobei zudem die erste Länge geringer ist als die zweite Länge. Folglich ist die Verbindungseinrichtung 4 so ausgebildet, dass im Vergleich zwischen erstem und zweitem Zustand die Verbindungseinrichtung 4 im zweiten Zustand wenigstens 15 cm länger ist als im ersten Zustand.

Ferner ist die Verbindungseinrichtung 4 als selbst-zusammenfaltender oder als sich selbst verkürzender Hohlzylinder oder als selbst-zusammenfaltender oder als sich selbst verkürzender Schlauch ausgebildet. Anders formuliert, ist die Verbindungseinrichtung 4 ziehharmonikaartig und als sich selbst verkürzend ausgebildet. Dabei ist - wie bereits erwähnt - deren Längung, also die Längung der Verbindungseinrichtung 4, vom Druck, mit welchem Verteilmaterial beaufschlagbar ist, abhängig.

Gemäß den Figuren 3, 4 und 4a weist die Eingangseinrichtung 2 in ihrem Inneren einen Einlasskanal 5 auf, dessen erstes Ende außerhalb der Verbindungseinrichtung 4 und dessen zweites Ende innerhalb der Verbindungseinrichtung 4 angeordnet ist. Dabei hat der Einlasskanal 5 einen konstanten Innendurchmesser.

Zudem hat das erste Ende einen Einlass 6 für Verteilmaterial, während das zweite Ende einen Auslass 7 für Verteilmaterial in die Verbindungseinrichtung 4 umfasst. Außerdem ist am zweiten Ende ein Energiespeicher 13 der Verbindungseinrichtung 4 angebracht bzw. angeordnet.

Des Weiteren umfasst gemäß den Figuren 3, 4 und 4a die Ausgangseinrichtung 3 in ihrem Inneren einen Auslasskanal 8, dessen erstes Ende E1 innerhalb der Verbindungseinrichtung 4 und dessen zweites Ende E2 außerhalb der Verbindungseinrichtung 4 angeordnet ist.

Dabei hat das erste Ende E1 einen Einlass 9 für Verteilmaterial aus der Verbindungseinrichtung 4, wobei das zweite Ende E2 einen Auslass 10 für Verteilmaterial umfasst.

Wie den Figuren 3, 4 und 4a zu entnehmen, ist am ersten Ende E1 ein Energiespeicher 13 der Verbindungseinrichtung 4 angebracht bzw. angeordnet.

Zudem zeigen die Figuren 3, 4 und 4a, dass der Auslasskanal 8 am ersten Ende E1 einen ersten D1 und am zweiten Ende E2 einen zweiten Innendurchmesser D2 aufweist. Dabei ist der erste Innendurchmesser D1 größer ausgebildet als der zweite Innendurchmesser D2. Das Verhältnis vom ersten Innendurchmesser D1 des Auslasskanals 8 zum zweiten Innendurchmesser D2 des Auslasskanals 8 ist größer als 85 Prozent. Die Innendurchmesser sind dabei auf das zu verteilende Verteilmaterial angepasst. Durch die unterschiedlichen Durchmesser kann ein Rückstau an druckbeaufschlagtem Verteilmaterial im Inneren der Verbindungseinrichtung 4 erzeugt werden, wodurch der Druck im Inneren der Verbindungseinrichtung 4 erhöhbar ist. Dies führt z. B. zu einer Längung der Verbindungseinrichtung 4.

Des Weiteren zeigen die Figuren 4 und 4a, dass der erste und zweite Innendurchmesser D1, D2 einen konstanten Querschnitt aufweisen. Dabei ist der Übergang vom ersten Innendurchmesser D1 auf den zweiten Innendurchmesser D2 in einer Stufe bzw. sprunghaft ausgebildet. Somit kann eben genannter Rückstau gebildet werden.

Auch zeigen Figuren 2 bis 4a, dass der Innendurchmesser des Einlasskanals 5 das gleiche Maß aufweist, wie der erste Innendurchmesser D1 des Auslasskanals 8.

Außerdem geht aus den Figuren 3, 4 und 4a hervor, dass die Ausgangseinrichtung 3 bzw. der Auslasskanal 8 mehrteilig bzw. zweiteilig ausgebildet ist.

Konkret hat die Ausgangseinrichtung 3 einen ersten 3A und einen zweiten Teil 3B, welche zusammen den Auslasskanal 8 bzw. die Ausgangseinrichtung 3 bilden. Dabei sind der erste und zweite Teil 3A, 3B koaxial angeordnet.

Des Weiteren weist der erste Teil 3A den ersten Innendurchmesser D1 und der zweite Teil 3B den zweiten Innendurchmesser D2 auf. Außerdem haben der erste Teil 3A zumindest teilweise und der zweite Teil 3B den gleichen Außendurchmesser. Zudem sind der erste Teil 3A und der zweite Teil 3B aneinander angeordnet.

Ferner hat der erste Teil 3A außenseitig einen Teil für einen Schnellanschluss, wie z. B. für einen Bajonettanschluss. Außerdem bildet der erste Teil 3A das erste Ende E1 und der zweite Teil 3B das zweite Ende E2 des Auslasskanals 8 der Ausgangseinrichtung 3.

Gemäß Figuren 3, 4 und 4a hat der zweite Teil 3B eine Verengung 11 zur Querschnittsverengung des ersten Innendurchmessers D1 des ersten Teils 3A, wobei die Verengung 11 in Form einer Lochblende ausgebildet ist. Dabei weist die Verengung 11 den zweiten Innendurchmesser D2 auf. Ferner hat der zweite Teil 3B einen Hohlzylinder 12, in welchen die Verengung 11 eingesetzt ist.

Wie bereits erwähnt, ist die Verbindungseinrichtung 4 als selbst-zusammenfaltender Hohlzylinder oder als sich selbst verkürzender Schlauch ausgebildet. Gemäß allen Figuren ist die Verbindungseinrichtung 4 ziehharmonikaartig ausgebildet.

Vor diesem Hintergrund zeigen die Figuren 3, 4 und 4a, dass die Verbindungseinrichtung 4 - wie bereits erwähnt - einen Energiespeicher 13 aufweist, der die Länge der Verbindungseinrichtung 4 in den ersten Zustand oder in einen Ausgangszustand zurückführen kann. Dabei ist der Energiespeicher 13 in Form einer Zugfeder und hohlzylinderförmig ausgestaltet.

Ferner ist der Energiespeicher 13 so ausgebildet, dass dieser bereits bei geringer Kraft gedehnt wird und dass dessen vollständige Dehnung von einer Dichtungseinheit 4A der Verbindungseinrichtung 4 vermieden oder verhindert wird.

Der Energiespeicher 13 ist an der Eingangseinrichtung 2 und an der Ausgangseinrichtung 3 angeordnet bzw. befestigt. Mit anderen Worten geschildert, weist der Energiespeicher 13 zwei Enden auf, von denen das eine Ende an der Eingangseinrichtung 2 und das andere Ende an der Ausgangseinrichtung 3 angeordnet ist. Dabei ist der Energiespeicher 13 bestrebt, den Abstand zwischen Eingangseinrichtung 2 und Ausgangseinrichtung 3 so kurz wie möglich zu halten.

Wie ferner den Figuren 3, 4 und 4a zu entnehmen, ist der Energiespeicher 13 innerhalb einer Dichtungseinheit 4A der Verbindungseinrichtung 4 so angeordnet, dass Verteilmaterial in direkter Verbindung oder ungehindert oder störungsfrei vom Einlasskanal 5 hin zum Auslasskanal 8 förderbar ist oder strömen kann.

Auch hat der Energiespeicher 13 den Innendurchmesser des Einlasskanals 5 der Eingangseinrichtung 2 und des Auslasskanals 8 der Ausgangseinrichtung 3, zumindest am ersten Ende E1. Dabei sind der Energiespeicher 13, der Einlasskanal 5 und der Auslasskanal 8 koaxial zueinander ausgerichtet.

Wie in allen Figuren zu erkennen, hat die Verbindungseinrichtung 4 - wie schon angedeutet - eine Dichtungseinheit 4A, welche ebenfalls die Länge der Verbindungseinrichtung 4 in den ersten Zustand oder in einen Ausgangszustand zurückführen kann und welche die Eingangseinrichtung 2 mit der Ausgangseinrichtung 3 verbindet.

Hierbei ist die Dichtungseinheit 4A als Faltenbalg und verteilmaterialdicht ausgebildet. Ferner ist die Dichtungseinheit 4A so ausgebildet, dass eine Überdehnung des Energiespeichers 13 der Verbindungseinrichtung 4 verhinderbar ist.

Dabei ist gemäß Figuren 3, 4 und 4a die Dichtungseinheit 4A im Wesentlichen hohlzylinderförmig und ziehharmonikaförmig ausgebildet und weist an ihren Enden einen Innendurchmesser auf, welcher geometrisch komplementär an den Außendurchmesser der Eingangs- und der Ausgangseinrichtung 2, 3 angepasst ist. Anders ausgedrückt, weist die Dichtungseinheit 4A an ihren Enden einen Innendurchmesser auf, welcher mit einem Außendurchmesser der Eingangs- und der Ausgangseinrichtung 2, 3 korrespondiert. Somit kann ein fluiddichter Übergang von der Verbindungseinrichtung 4 zur Eingangs- 2 und zur Ausgangseinrichtung 3 geschaffen werden.

Wie in den Figuren 3, 4 und 4a zudem gezeigt, umfasst die Eingangseinrichtung 2 ein erstes und ein zweites Ende, wobei das erste Ende einen form- und reibschlüssigen Verbindungsanschluss 14 für einen ersten Verbindungsteil 15 einer Schnellverbindungseinrichtung der Förderleitung 1, wie ein Bajonettanschluss, aufweist. Dabei hat das erste Ende oder der Verbindungsanschluss 14 ein Außengewinde. Ferner hat das zweite Ende eine Befestigung 16, an welcher der Energiespeicher 13 angebracht ist.

Des Weiteren weist, wie in Figuren 3, 4 und 4a gezeigt, die Eingangseinrichtung 2 einen Befestigungsbereich 17 zum Befestigen der Verbindungseinrichtung 4 oder deren Dichtungseinheit 4A an der Eingangseinrichtung 2 auf. Der Befestigungsbereich 17 ist zwischen erstem und zweitem Ende der Eingangseinrichtung 2 angeordnet.

Zudem weist der Befestigungsbereich 17, wie ebenfalls in Figuren 3, 4 und 4a zu sehen, einen Außendurchmesser auf, welcher geometrisch komplementär an einen Innendurchmesser eines Endes der Verbindungseinrichtung 4 bzw. deren Dichtungseinheit 4A angepasst ist.

Wie erwähnt, hat gemäß allen Figuren die Förderleitung 1 einen ersten Verbindungsteil 15 einer Schnellverbindungseinrichtung, mit welcher die Förderleitung 1 schnell und werkzeuglos an eine Verteilmaschine (nicht dargestellt) anbringbar ist.

Dabei ist am ersten Ende der Eingangseinrichtung 2 der erste Verbindungsteil 15, beispielsweise ausgebildet wie ein Teil eines Bajonettanschlusses, angeordnet. Der erste Verbindungsteil 15 hat ein Innengewinde, mit welchem der erste Verbindungsteil 15 mit der Eingangseinrichtung 2, z. B. fluidfördernd und fluiddicht, verbindbar ist.

So ist also der erste Verbindungsteil 15 als Teil eines Bajonettanschlusses, z. B. in Form eines Stiftes für eine Kulissenführung, ausgebildet. Ferner ist der erste Verbindungsteil 15 geometrisch korrespondierend zu einem Düsenhalter für Spritzdüsen einer Verteilmaschine ausgebildet.

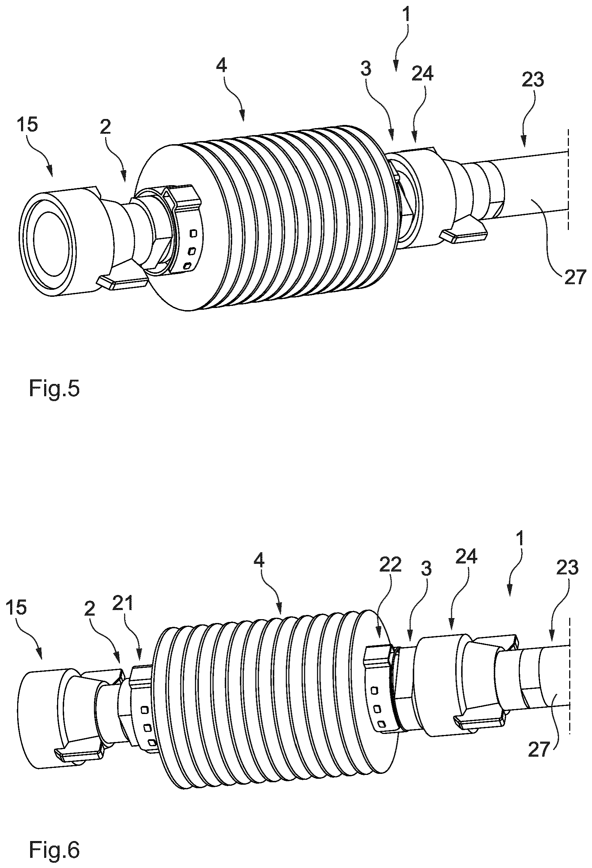

Gemäß den Figuren 1 bis 6 ist der erste Verbindungsteil 15 zumindest abschnittsweise nach Art einer Düsenkappe oder einer Spritzdüse ausgebildet, sodass der erste Verbindungsteil 15 an einem Düsenstock oder an einem Düsenhalter einer Verteilmaschine anordenbar ist. So weist also der erste Verbindungsteil 15 einen mit einem Düsenstock oder einen mit einem Düsenhalter einer Verteilmaschine, welcher an einem Rahmen oder Gestänge einer Verteilmaschine anordenbar ist, korrespondierenden Verbindungsabschnitt auf.

Dabei ist der erste Verbindungsteil 15 so ausgebildet, dass dieser mit einer Vierteldrehung relativ zu einem Düsenhalter oder zu einem Düsenstock einer Verteilmaschine eben von dem Düsenhalter/Düsenstock lösbar oder an dem Düsenhalter/Düsenstock befestigbar ist.

Gemäß den Figuren 1 bis 6 umfasst die Ausgangseinrichtung 3 ein erstes und ein zweites Ende, wobei am zweiten Ende ein zweiter Verbindungsteil 18 einer Schnellverbindungseinrichtung der Förderleitung 1, wie ein Bajonettanschluss, angeordnet ist.

Dabei ist der zweite Verbindungsteil 18 als Teil eines Bajonettanschlusses, z. B. in Form einer Kulissenführung für einen Stift, ausgebildet.

Der zweite Verbindungsteil 18 ist geometrisch korrespondierend zu einer Spritzdüse einer Verteilmaschine ausgebildet, wobei der zweite Verbindungsteil 18 zumindest abschnittsweise nach Art eines Düsenhalters oder eines Düsenstocks einer Verteilmaschine ausgebildet ist, an welchem eine Spritzdüse einer Verteilmaschine anordenbar ist. Anders ausgedrückt, weist der zweite Verbindungsteil 18 einen mit einer Spritzdüse korrespondierenden Verbindungsabschnitt auf.

Dabei ist der zweite Verbindungsteil 18 so ausgebildet, dass mit einer Vierteldrehung einer Spritzdüse oder eines Schleppschlauchs 23 der Förderleitung 1 relativ zum zweiten Verbindungsteil 18 die Spritzdüse oder der Schleppschlauch 23 von dem zweiten Verbindungsteil 18 lösbar oder an dem zweiten Verbindungsteil 18 befestigbar ist.

Des Weiteren zeigen Figuren 3, 4 und 4a, dass das erste Ende der Ausgangseinrichtung 3 eine Befestigung 19 aufweist, an welcher der Energiespeicher 13 der Verbindungseinrichtung 4 angebracht ist.

Zudem hat gemäß Figuren 3 bis 4a die Ausgangseinrichtung 3 einen Befestigungsbereich 20 zum Befestigen der Verbindungseinrichtung 4 oder deren Dichtungseinheit 4A. Der Befestigungsbereich 20 ist dabei zwischen dem ersten und zweiten Ende der Ausgangseinrichtung 3 angeordnet.

Auch weist der Befestigungsbereich 20 einen Außendurchmesser auf, welcher geometrisch komplementär an den Innendurchmesser eines Endes der Verbindungseinrichtung 4 oder deren Dichtungseinheit 4A angepasst ist.

Des Weiteren zeigen alle Figuren, dass die Förderleitung 1 eine erste Halteeinrichtung 21 zum Befestigen der Verbindungseinrichtung 4 bzw. deren Dichtungseinheit 4A an der Eingangseinrichtung 2 aufweist.

Dabei unterstützt die erste Halteeinrichtung 21 eine form- und bildet eine reibschlüssige Verbindung zwischen der Eingangseinrichtung 2 und der Verbindungseinrichtung 4 aus, wobei die erste Halteeinrichtung 21 in Form einer Klemmschelle ausgebildet ist.

Außerdem hat die Förderleitung 1 - wie in den Figuren gezeigt - eine zweite Halteeinrichtung 22 zum Befestigen der Verbindungseinrichtung 4 bzw. deren Dichtungseinheit 4A an der Ausgangseinrichtung 3. Die zweite Halteeinrichtung 22 unterstützt eine form- und bildet eine reibschlüssige Verbindung zwischen der Ausgangseinrichtung 3 und der Verbindungseinrichtung 4. Dabei ist die zweite Halteeinrichtung 22 in Form einer Klemmschelle ausgebildet.

Gemäß allen Figuren weist die Förderleitung 1 einen Schleppschlauch 23 auf, der an der Ausgangseinrichtung 3 angeordnet ist.

Der Schleppschlauch 23 hat einen ersten Verbindungsteil 24 einer Schnellverbindungseinrichtung, mit welchem der Schleppschlauch 23 schnell und werkzeuglos an der Ausgangseinrichtung 3 angeordnet ist bzw. mit welchem der Schleppschlauch 23 an dem zweiten Verbindungsteil 18 der Ausgangseinrichtung 3 angeordnet ist.

Ferner ist der erste Verbindungsteil 24 als Teil eines Bajonettanschlusses, z. B. in Form eines Stiftes für eine Kulissenführung, ausgebildet.

Wie in den Figuren 1 bis 3 gezeigt, umfasst der Schleppschlauch 23 ein Gewicht 25 und einen kugelförmigen Schutz 26 als Abriebschutz für das Gewicht 25.

Zudem hat der Schleppschlauch 23 einen Auslassschlauch 27, welcher Verteilmaterial auf ein Feld ausgeben kann. An einem Ende des Auslassschlauchs 27 ist das Gewicht 25 sowie der Schutz 26 und am anderen Ende der erste Verbindungsteil 24 angeordnet.

Abschließend wird darauf hingewiesen, dass eine landwirtschaftliche Verteilmaschine (nicht dargestellt) zum Verteilen von Verteilmaterial oben vorgestellte Förderleitung 1 mehrfach aufweisen kann.

Dabei kann die landwirtschaftliche Verteilmaschine ein Befestigungsprofil zur Befestigung und Versorgung der Förderleitungen 1 mit Verteilmaterial aufweisen. Auch kann das Befestigungsprofil, z. B. als Hohlprofil ausgestaltet und zur Förderung von Verteilmaterial ausgebildet, pro Förderleitung 1 einen zweiten Verbindungsteil einer Schnellverbindungseinrichtung aufweisen, an welchen ein erster Verbindungsteil 15 einer Schnellverbindungseinrichtung einer Förderleitung 1, der am ersten Ende der Eingangseinrichtung 2 angeordnet ist, schnell und werkzeuglos befestigbar ist.

Ferner können an dem Befestigungsprofil mehrere Förderleitungen 1, z. B. parallel, angeordnet sein, wobei zudem an dem Befestigungsprofil mehrere Förderleitungen 1 so angeordnet sein können, dass mit diesen gleichzeitig Verteilmaterial ausbringbar ist.

Im Ergebnis kann vorgestellte Ausbildung der Förderleitung 1 ein Klemmen einer Förderleitung 1, z. B. in einem Spritzgestänge einer landwirtschaftlichen Verteilmaschine, aufgrund der veränderlichen Länge bzw. der Längung unterbinden.

Denn z. B. für den Fall, dass der im Inneren der Verbindungseinrichtung 4 auf das Verteilmaterial einwirkende Druck beispielsweise dem Umgebungsdruck entspricht oder kleiner ist als die Kraft des Energiespeichers 13 der Verbindungseinrichtung 4, verkürzt sich die Förderleitung 1. Dabei kann sich die Förderleitung 1 derart verkürzen, dass ein Klemmen der Förderleitung 1, z. B. in einem Spritzgestänge einer landwirtschaftlichen Verteilmaschine, bei einem Klappvorgang der landwirtschaftlichen Verteilmaschine unterbunden werden kann. Hingegen ist z. B. für den Fall, dass der im Inneren der Verbindungseinrichtung 4 auf das Verteilmaterial einwirkende Druck beispielsweise größer ist als der Umgebungsdruck oder größer ist als die Kraft des Energiespeichers 13 der Verbindungseinrichtung 4, verlängert sich die Förderleitung 1. Dabei kann sich die Förderleitung 1 derart verlängern, dass ein Ausbringen von Verteilmaterial durch die landwirtschaftliche Verteilmaschine begünstigt wird.

Somit ist also ein Anheben und Absenken z. B. des Schleppschlauches 23 der Förderleitung 1 möglich.

Des Weiteren kann der Druck, mit welchem Verteilmaterial beaufschlagbar ist, von einer Fördereinrichtung der landwirtschaftlichen Verteilmaschine generiert und/oder eingestellt werden. Auch kann der Druck bedarfsgerecht zu- und/oder abschaltbar und/oder anpassbar sein.

### Bezugszeichenliste

| | | | |
|---|---|---|---|
| 1 | Förderleitung | 17 | Befestigungsbereich |
| 2 | Eingangseinrichtung | 18 | zweiter Verbindungsteil einer |
| 3 | Ausgangseinrichtung | | Schnellverbindungseinrichtung |
| 3A | erster Teil | 19 | Befestigung |
| 3B | zweiter Teil | 20 | Befestigungsbereich |
| 4 | Verbindungseinrichtung | 21 | erste Halteeinrichtung |
| 4A | Dichtungseinheit | 22 | zweite Halteeinrichtung |
| 5 | Einlasskanal | 23 | Schleppschlauch |
| 6 | Einlass | 24 | erster Verbindungsteil einer |
| 7 | Auslass | | Schnellverbindungseinrichtung |
| 8 | Auslasskanal | 25 | Gewicht |
| 9 | Einlass | 26 | Schutz |
| 10 | Auslass | 27 | Schlauch |
| 11 | Verengung | | |
| 12 | Hohlzylinder | | |
| 13 | Energiespeicher | E1 | erstes Ende des Auslasskanals |
| 14 | Verbindungsanschluss | | der Ausgangseinrichtung |
| 15 | erster Verbindungsteil einer Schnellverbindungseinrichtung | E2 | zweites Ende des Auslasskanals der Ausgangseinrichtung |
| 16 | Befestigung | | |

## Patentansprüche

1. Förderleitung (1) für eine landwirtschaftliche Verteilmaschine und zum Fördern von Verteilmaterial aufweisend:
- eine Eingangseinrichtung (2) zum Einströmen druckbeaufschlagbaren Verteilmaterials in die Förderleitung (1),
- eine Ausgangseinrichtung (3) zum Ausströmen druckbeaufschlagbaren Verteilmaterials aus der Förderleitung (1), und
- mindestens eine Verbindungseinrichtung (4) zur Strömungsverbindung der Eingangseinrichtung (2) mit der Ausgangseinrichtung (3),
- wobei die mindestens eine Verbindungseinrichtung (4) derart längenveränderlich ausgebildet ist, dass diese in Abhängigkeit des Drucks, mit welchem Verteilmaterial beaufschlagbar ist, eine veränderliche Länge oder eine Längung aufweist.

2. Förderleitung nach Anspruch 1,
- wobei die Längung der mindestens einen Verbindungseinrichtung (4) vom Druck, mit welchem Verteilmaterial beaufschlagbar ist, abhängig ist und/oder bestimmt wird,
und/oder
- wobei die mindestens eine Verbindungseinrichtung (4) so ausgebildet ist, dass je größer der Druck im Inneren der mindestens einen Verbindungseinrichtung (4) ist, desto größer ist deren Länge oder desto größer ist deren Längung.

3. Förderleitung nach Anspruch 1 oder 2,
- wobei die mindestens eine Verbindungseinrichtung (4) so ausgebildet ist, dass diese in einem ersten Zustand, in welchem die mindestens eine Verbindungseinrichtung (4) einem ersten Druck, mit welchem Verteilmaterial beaufschlagbar ist, ausgesetzt ist, eine erste Länge aufweist,
- wobei die mindestens eine Verbindungseinrichtung (4) so ausgebildet ist, dass diese in einem zweiten Zustand, in welchem die mindestens eine Verbindungseinrichtung (4) einem zweiten Druck, mit welchem Verteilmaterial beaufschlagbar ist, ausgesetzt ist, eine zweite Länge aufweist,
- wobei der erste Druck geringer ist als der zweite Druck,
und/oder
- wobei die erste Länge geringer ist als die zweite Länge.

4. Förderleitung nach einem der vorangehenden Ansprüche,
- wobei die mindestens eine Verbindungseinrichtung (4) als selbst-zusammenfaltender oder als sich selbst verkürzender Hohlzylinder oder als selbst-zusammenfaltender oder als sich selbst verkürzender Schlauch ausgebildet ist.

5. Förderleitung nach einem der vorangehenden Ansprüche,
- wobei die Ausgangseinrichtung (3) in ihrem Inneren einen Auslasskanal (8) aufweist, dessen erstes Ende (E1) innerhalb der mindestens einen Verbindungseinrichtung (4) und dessen zweites Ende (E2) außerhalb der mindestens einen Verbindungseinrichtung (4) angeordnet ist,
- wobei der Auslasskanal (8) am ersten Ende (E1) einen ersten (D1) und am zweiten Ende (E2) einen zweiten Innendurchmesser (D2) aufweist, und
- wobei der erste Innendurchmesser (D1) größer ausgebildet ist als der zweite Innendurchmesser (D2).

6. Förderleitung nach einem der Ansprüche 5,
- wobei die Ausgangseinrichtung (3) und/oder der Auslasskanal (8) einteilig, einstückig, oder mehrteilig, zweiteilig ausgebildet ist,
und/oder
- wobei die Ausgangseinrichtung (3) einen ersten (3A) und einen zweiten Teil (3B) umfasst, welche zusammen den Auslasskanal (8) und/oder die Ausgangseinrichtung (3) bilden.

7. Förderleitung nach Anspruch 6,
- wobei der erste Teil (3A) außenseitig einen Teil für einen Schnellanschluss aufweist,
- wobei der zweite Teil (3B) eine Verengung (11) zur Querschnittsverengung des ersten Innendurchmessers (D1) des ersten Teils (3A) aufweist,
- wobei die Verengung (11) in Form einer Lochblende ausgebildet ist,
und/oder
- wobei die Verengung (11) einen zweiten Innendurchmesser (D2) aufweist.

8. Förderleitung nach einem der vorangehenden Ansprüche,
- wobei die mindestens eine Verbindungseinrichtung (4) einen Energiespeicher (13) aufweist, der die Länge der mindestens einen Verbindungseinrichtung (4) in den ersten Zustand oder in einen Ausgangszustand zurückführen kann,
- wobei der Energiespeicher (13) zwei Enden aufweist, von denen das Ende eine an der Eingangseinrichtung (2) und das andere Ende an der Ausgangseinrichtung (3) angeordnet und/oder befestigt ist.

9. Förderleitung nach einem der vorangehenden Ansprüche,
- wobei die mindestens eine Verbindungseinrichtung (4) eine Dichtungseinheit (4A) aufweist, welche die Länge der mindestens einen Verbindungseinrichtung (4) in den ersten Zustand oder in einen Ausgangszustand zurückführen kann und/oder welche die Eingangseinrichtung (2) mit der Ausgangseinrichtung (3) verbindet, und
- wobei die Dichtungseinheit (4A) so ausgebildet ist, dass eine Überdehnung eines Energiespeichers (13) der mindestens einen Verbindungseinrichtung (4) verhinderbar ist.

10. Förderleitung nach einem der vorangehenden Ansprüche,
- wobei die Förderleitung (1) einen ersten Verbindungsteil (15) einer Schnellverbindungseinrichtung aufweist, mit welcher die Förderleitung (1) schnell und werkzeuglos an eine Verteilmaschine anbringbar ist,
- wobei am ersten Ende der Eingangseinrichtung (2) der erste Verbindungsteil (15) angeordnet ist,
und/oder
- wobei der erste Verbindungsteil (15) so ausgebildet ist, dass dieser mit einer Vierteldrehung relativ zu einem Düsenhalter oder zu einem Düsenstock einer Verteilmaschine von dem Düsenhalter/Düsenstock lösbar oder an dem Düsenhalter/Düsenstock befestigbar ist.

11. Förderleitung nach einem der vorangehenden Ansprüche,
- wobei die Ausgangseinrichtung (3) ein erstes und ein zweites Ende umfasst,
- wobei am zweiten Ende ein zweiter Verbindungsteil (18) einer Schnellverbindungseinrichtung der Förderleitung (1) angeordnet ist,
und/oder
- wobei der zweite Verbindungsteil (18) so ausgebildet ist, dass mit einer Vierteldrehung einer Spritzdüse oder eines Schleppschlauchs (23) einer Verteilmaschine relativ zum zweiten Verbindungsteil (18) die Spritzdüse oder der Schleppschlauch (23) von dem zweiten Verbindungsteil (18) lösbar oder an dem zweiten Verbindungsteil (18) befestigbar ist.

12. Förderleitung nach einem der vorangehenden Ansprüche,
- wobei die Förderleitung (1) mindestens zwei Verbindungseinrichtungen (4) aufweist, die in Reihe und/oder hintereinander und/oder nacheinander und/oder aneinander angeordnet sind, um eine gemeinsame Verbindungseinrichtung (4) zu bilden.

13. Landwirtschaftliche Verteilmaschine zum Verteilen von Verteilmaterial aufweisend:
- wenigstens eine Förderleitung (1) nach einem der vorangehenden Ansprüche.

14. Landwirtschaftliche Verteilmaschine nach Anspruch 13,
- wobei die landwirtschaftliche Verteilmaschine ein Befestigungsprofil zur Befestigung und Versorgung der wenigstens einen Förderleitung (1) mit Verteilmaterial aufweist,
- wobei an dem Befestigungsprofil mehrere Förderleitungen (1) angeordnet sind,
und/oder
- wobei an dem Befestigungsprofil mehrere Förderleitungen (1) so angeordnet sind, dass mit diesen gleichzeitig Verteilmaterial ausbringbar ist.
